Europäisches Patentamt

European Patent Office

Office européen des brevets

(19)

(11) Veröffentlichungsnummer: **0 223 224 B1**

## (12) EUROPÄISCHE PATENTSCHRIFT

(45) Veröffentlichungstag der Patentschrift: **22.05.91**

(51) Int. Cl.⁵: **A01M 7/00**

(21) Anmeldenummer: **86115922.6**

(22) Anmeldetag: **17.11.86**

(54) **Landwirtschaftliche Feldspritze.**

(30) Priorität: **19.11.85 DE 3540923**

(43) Veröffentlichungstag der Anmeldung:
**27.05.87 Patentblatt 87/22**

(45) Bekanntmachung des Hinweises auf die
Patenterteilung:
**22.05.91 Patentblatt 91/21**

(84) Benannte Vertragsstaaten:
**BE DE FR GB NL**

(56) Entgegenhaltungen:
**EP-A- 0 111 433          DE-A- 1 557 915
DE-A- 2 658 451          DE-A- 3 331 413
DE-A- 3 442 359          US-A- 4 260 107**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Dreyer, Heinz, Dipl.-Ing. Univ., Dr.
agr.
Am Amazonenwerk 7
W-4507 Hasbergen(DE)**

## Beschreibung

Die Erfindung betrifft eine landwirtschaftliche Feldspritze gemäß des Oberbegriffes des Patentanspruches 1.

Eine derartige Feldspritze ist bereits durch die DE-PS 33 31 413 bekannt. Bei dieser Feldspritze kann über ein zwischen der Zufuhrleitung und der Ausbringleitung angeordnetes Regelventil die Ausbringmenge verändert werden. Es sind bereits auch Fernbedienungsvorrichtungen für derartige Regelventile bekannt geworden, so daß vom Schleppersitz aus während des Spritzvorganges die Ausbringmenge zu vergrößern bzw. zu verkleinern ist. Die Reduzierung bzw. Erhöhung der Ausbringmenge erfolgt über die gesamte Spritzbreite der Feldspritze in gleicher Weise.

Der Erfindung liegt nun die Aufgabe zugrunde, auch bei Feldspritzen mit großen Arbeitsbreiten bis 24 m und mehr während des Spritzvorganges in kleinen Spritzbreiten die Spritzmenge variieren zu können.

Diese Aufgabe wird erfindungsgemäß durch die Maßnahmen des Kennzeichens des Anspruches 1 gelöst. Hier ist die Ausbringmenge vom Schleppersitz aus während des Spritzvorganges abschnittsweise in Abschnitten der Spritzbreite vorzugsweise ausgehend von einem Grundausbringmengenwert zu vergrößern und/oder zu verkleinern. Dadurch, daß die Feldspritze zumindest zwei Ausbringleitungen aufweist, die jeweils einem Abschnitt der Spritzbreite zugeordnet sind, ist es aufgrund der erfindungsgemäßen Maßnahmen auf einfachste Weise möglich, über die jeweilige Ausbringleitung die jeweils einem Abschnitt zugeordnet ist, die Ausbringmenge an Spritzmittel zu regeln. Somit kann vom Schleppersitz aus während des Spritzvorganges für die eine Seite bzw. von Abschnitten der Spritzbreite der Feldspritze eine andere Spritzmenge eingestellt werden als auf der anderen Seite bzw. als bei den übrigen Teilen der Spritzbreite der Feldspritze. So kann beispielsweise auf der rechten Seite der Feldspritze eine größere Menge Flüssigdünger oder Pflanzenbehandlungsmittel in bezug auf die Grundausbringmenge im Vergleich zu der linken Seite, wo weniger Flüssigdünger bzw. Pflanzenbehandlungsmittel als die Grundausbringmenge ausgebracht wird, ausgebracht werden.

Dieses ist beispielsweise von erheblicher Bedeutung, wenn der Landwirt mit einer Feldspritze, insbesondere mit großen Arbeitsbreiten während des Spritzvorganges quer zum Hang fährt, sowie mit seiner Feldspritze Streifen innerhalb der zu bespritzenden Fläche passiert, die entweder über- oder unterdüngt sind bzw. unterschiedlich stark verunkrautet bzw. überhaupt nicht verunkrautet sind. Es ist in diesen Fällen äußerst wünschenswert, wenn der Landwirt dann in äußerst kleinen Abschnitten der Spritzbreite die Ausbringmenge von Flüssigdünger bzw. von Pflanzenbehandlungsmitteln ziemlich exakt an die Breite dieser jeweiligen Streifen anpassen kann. Dieses ist vor allem, wenn der Umweltschutz ernst genommen wird, von sehr großer Bedeutung. Denn durch die erfindungsgemäße Maßnahme ist es erstmalig möglich geworden, bei Feldspritzen in kleinen Abschnitten der Spritzbreite die Ausbringmenge individuell entsprechend der Nährstoffversorgung bzw. der Stärke der Verunkrautung anzupassen.

Des weiteren ist die abschnittsweise Reduzierung der Spritzmenge vor allem bei Feldspritzen mit großen Arbeitsbreiten von 18 bzw. 24 m und mehr von großer Bedeutung, wenn während des Spritzvorganges über einen schmalen Streifen, der wesentlich schmaler als die Spritzbreite der Feldspritze ist, mehr oder weniger Flüssigkeit als über die übrige Arbeitsbreite ausgebracht werden soll, d.h., daß nur in diesem schmalen Bereich die Spritzmenge vergrößert bzw. verkleinert werden soll und nicht über die gesamte Arbeitsbreite der Maschine, da dann in diesen anderen Bereich Über- und Unterdüngungen entstehen würden, die sich auf den Ertrag negativ auswirken. Somit ist es also durch die erfindungsgemäße Maßnahme möglich, den für verschiedene Abschnitte der Spritzbreite unterschiedlichen Düngerbedarf zumindest annähernd in Abschnitten anzupassen.

Bisher war es nämlich nur möglich, über die gesamte Arbeitsbreite die Spritzmenge zu verändern, so daß man dann, wenn man die Ausbringmenge vergrößert hat, in den Abschnitten, wo an sich nur die Grundausbringmenge ausgebracht werden sollte, Überdüngungen vorgenommen hat, so daß Lagergetreide die unvermeidliche Folge war, so daß es Ertragseinbußen gab. Der gleiche Nachteil tritt auch auf, wenn man die Ausbringmenge über die gesamte Spritzbreite verringert, wenn die Ausbringmenge verringert werden muß, da in gewissen Abschnitten der Spritzbreite sonst Überdüngungen, die Lagergetreide hervorrufen würden, entstand, so daß dann in den Abschnitten, an denen an sich mehr Flüssigdünger gedüngt werden müßte, bzw. die Grundausbringmenge ausgebracht werden müßte, zu wenig Flüssigdünger ausgebracht wird, so daß auch in diesen Streifen eine Ertragseinbuße aufgrund mangelnder Düngung sich ergeben haben.

Die gleichen Nachteile entstehen im Prinzip auch, wenn man Pflanzenbehandlungsmittel ausbringt, um Unkräuter zu vernichten, daß man dann die Spritzmenge in gewissen Abschnitten erhöht, um so auch sämtliche Unkräuter in äußerst stark verunkrauteten Streifen zu vernichten. Hier kann es dann vorkommen, daß aufgrund der Überdosierung der Pflanzenbehandlungmittel die Nutzpflanzen mit abgetötet werden.

Die US-A-24 60 107 zeigt ein Spritzsystem, welches auf ein Fahrzeug aufgebaut ist. Mit dieser Vorrichtung lassen sich Flüssigkeiten ausbringen. Weiterhin weist diese Vorrichtung zwei in einem Spritzgestänge unterbrachte Ausbringleitungen auf. Die Ausbringmenge läßt sich während des Ausbringvorganges über eine Vorrichtung variieren, in dem die Pumpe entsprechend gesteuert wird. Mittels zweier Hydraulikzylinder lassen sich die jeweils zugeordneten Ventile öffnen oder schließen, so daß unabhängig voneinander die Flüssigkeitszufuhr zu den beiden Ausbringleitungen zu unterbrechen ist. Diese Druckschrift zeigt jedoch nicht, daß die Ausbringmengen während des Spritzvorganges abschnittsweise zu variieren sind, d.h., daß den zwei Leitungen unterscheidliche Mengen Flüssigkeit zugeführt werden kann. Über die Hydraulikzylinder lassen sich die beiden Ventile nur so schalten, daß den Ausbringleitungen entweder Flüssigkeit oder keine Flüssigkeit zugeführt wird. Es ist jedoch nicht möglich, der einen Leitung eine kleinere oder größere Menge als der anderen Leitung zuzuführen.

In einer Ausführungsform ist erfindungsgemäß vorgesehen, daß die Dosierelemente als Regelventile ausgebildet sind, daß zumindest zwei Regelventile vorgesehen sind, die unabhängig von Schleppersitz aus regelbar sind. Aufgrund dieser Maßnahme kann über das jeweilige Regelventil in dem jeweiligen Abschnitt der Spritzbreite die Ausbringmenge unabhängig von den Ausbringmengen in den anderen Abschnitten der Spritzbreite geregelt werden.

In einer anderen Ausführungsform ist erfindungsgemäß vorgesehen, um in Abschnitten der Spritzbreite abschnittsweise die Spritzmenge zu verändern, daß hinter dem zentralen Regelventil zumindest ein Stromteilerventil angeordnet ist. Über dieses Stromteilerventil, welches sinnvoller Weise über eine Fernbedienungsvorrichtung vom Schleppersitz aus verstellt werden kann, kann so eingestellt werden, daß den beiden hieran angeschlossenen Abschnitten der Spritzbreiten jeweils die gleiche Spritzmenge zugeführt wird, so daß die Spritzdüsen, die in diesen Abschnitten der Spritzbreite angeordnet sind, die gleiche Menge Spritzmittel ausbringen. Dieses Stromteilerventil ist jedoch auch so einstellbar, daß den hieran angeschlossenen beiden Abschnitten der Spritzbreite unterschiedliche Mengen Spritzmittel zugeführt werden, wobei es möglich ist, daß in der einfachsten Form auf der eine Seite der Spritzbreite mehr Spritzmittel und auf der anderen Seite der Spritzbreite weniger Spritzmittel ausgebracht wird. Des weiteren ist es jedoch auch möglich, das Regelventil zusätzlich bei Verstellung des Stromteilerventils so mit zu verstellen, daß in dem einen Abschnitt der Spritzbreite die Spritzmittelausbringmenge konstant bleibt, während sie für den anderen Abschnitt der Spritzbreite vergrößert bzw. verkleinert wird. Im gleichen Maße wie die Spritzmittelmenge für den einen Abschnitt vergrößert bzw. verkleinert werden soll, wenn der andere Abschnitt weiterhin die Grundausbringspritzmenge ausbringen soll, muß dann das Regelventil entweder weiter auf- oder zugeregelt werden.

In einer anderen Ausführungsform ist erfindungsgemäß vorgesehen, daß jeweils in jeder der Ausbringleitungen, die jeweils einem Abschnitt der Spritzbreite zugeordnet sind, ein als einstellbares Drosselventil ausgebildetes Dosierventil angeordnet ist. Infolge dieser Maßnahmen kann dann über die Drosselventile in einfacher Weise die Ausbringmenge für jeden Abschnitt der Spritzbreite unabhängig voneinander geregelt werden.

Des weiteren ist in einer anderen Ausführungsform vorgesehen, daß in jedem Abschnitt der Spritzbreite zumindest zwei, vorzugsweise drei Ausbringleitungen mit Ausbringdüsen angeordnet sind, wobei jede Ausbringleitung unabhängig von der anderen Ausbringleitung in einem Abschnitt der Spritzbeite zubzw. abschaltbar ist. Infolge dieser Maßnahme kann durch das Ab- oder Zuschalten der einzelnen Ausbringleitungen mit den Ausbringdüsen die Ausbringmenge in den einzelnen Abschnitten der Spritzbreite erhöht bzw. verringert werden.

Außerdem ist noch in einer anderen erfindungsgemäßen Ausführungsform vorgesehen, daß als Ausbringdüsen Mehrfachdüsenhalter mit verschiedenartigen Düsen vorgesehen sind, und daß über eine Fernbedienungsvorrichtung die Mehrfachdüsenhalter verstellbar sind, so daß vom Schleppersitz aus jeweils die Düsen durch Verstellen der Mehrfachdüsenhalter wechselbar sind. Infolge dieser Maßnahme ist es in Verbindung mit der Verstellung des Regelventils möglich, daß auch extreme Ausbringmengenänderungen während des Spritzvorganges vom Schleppersitz aus vorgenommen werden können, äußerst großen Ausbringmengenänderungen dann jeweils über die Fernbedienungsvorrichtung die entsprechende Düse durch Verstellen der Mehrfachdüsenhalter die Düsen wechselbar sind.

Weitere Einzelheiten sind den übrigen Unteransprüchen, der Beispielsbeschreibung und den Zeichnungen zu entnehmen. Hierbei zeigen

Fig. 1      den Anschluß der Leitungen einer erfindungsgemäßen Feldspritze in schematischer Darstellung,

Fig. 2      einen anderen Anschluß der einzelnen Leitungen einer erfindungsgemäßen Feldspritze in schematischer Darstellung,

Fig. 3　　noch ein weiterer Anschluß der einzelnen Leitungen einer erfindungsgemäßen Feldspritze ebenfalls in schematischer Darstellung,

Fig. 4　　noch ein anderer Anschluß der einzelnen Leitungen an die Ventilarmatur einer erfindungsgemäßen Feldspritze in schematischer Darstellung und

Fig. 5　　die erfindungsgemäße Anordnung von Mehrfachdüsenhaltern an dem Spritzgestänge einer erfindungsgemäßen Feldspritze in schematischer Darstellung.

Die landwirtschaftliche Feldspritze weist einen Tank 1, eine Pumpe 2 und die beiden Druckregelventile 3 und 4 mit den zentralen Absperrhähnen 5 auf. Am Boden des Tankes 1 ist der Filter 6 angeordnet, an den die Zufuhrleitung 7 zu der Pumpe 2 angeschlossen ist. Die Pumpe 2 wird in bekannter Weise von der Zapfwelle eines Fahrzeuges angetrieben. Die Pumpe 2 saugt über die Zufuhrleitung 7 und den Filter 6 die Spritzmittelflüssigkeit aus dem Tank 1 an und drückt diese Flüssigkeit über die weiterführende Zufuhrleitung 8 zu den beiden Druckregelventilen 3 und 4. An den beiden Druckregelventilen 3 und 4 ist jeweils noch eine Rückflußleitung 9 angordnet, die in den Tank 1 zurückführt.

An den beiden Druckregelventilen 3 und 4 sind die Teilbreitenabsperrventile 10 angeordnet, über die die einzelnen Teilbreiten des Spritzgestänges mit Spritzdüsen ab- bzw. zugeschaltet werden können. An diese Teilbreitenabschalthähne 10 schließen sich die zu den einzelnen Abschnitten 11, 12, 13 und 14 der Spritzbreite bzw. des Spritzgestänges führenden Ausbringleitungen 15 und 16 an. Die Ausbringleitungen 15 sind an die Teilbreitenabschalthähne 10 des Druckregelventiles 3 angeordnet, während die Ausbringleitungen 16 an die Teilbreitenabschalthähne 10 des Druckregelventils 4 angeordnet sind. In den einzelnen Teilbreitenabschnitten 11, 12, 13, und 14 des Spritzgestänges bzw. der Spritzbreite sind die angedeuteten Ausbringdüsen 17, die die einzelnen angedeuteten Spritzfächer erzeugen, angeordnet.

Die Druckregelventile 3 und 4 weisen die elektrischen Verstellmotore 18 und 19 auf, die über Kabel 20 mit einem Schaltkasten, der auf dem Schlepper, der die Feldspritze trägt, angeordnet ist, verbunden sind. Über diesen Schaltkasten können dann mittels der Elektromotore 18 und 19 die Regelventile 3 und 4 verstellt werden, so daß unterschiedliche Ausbringmengen für die Düsen 17 einstellbar sind.

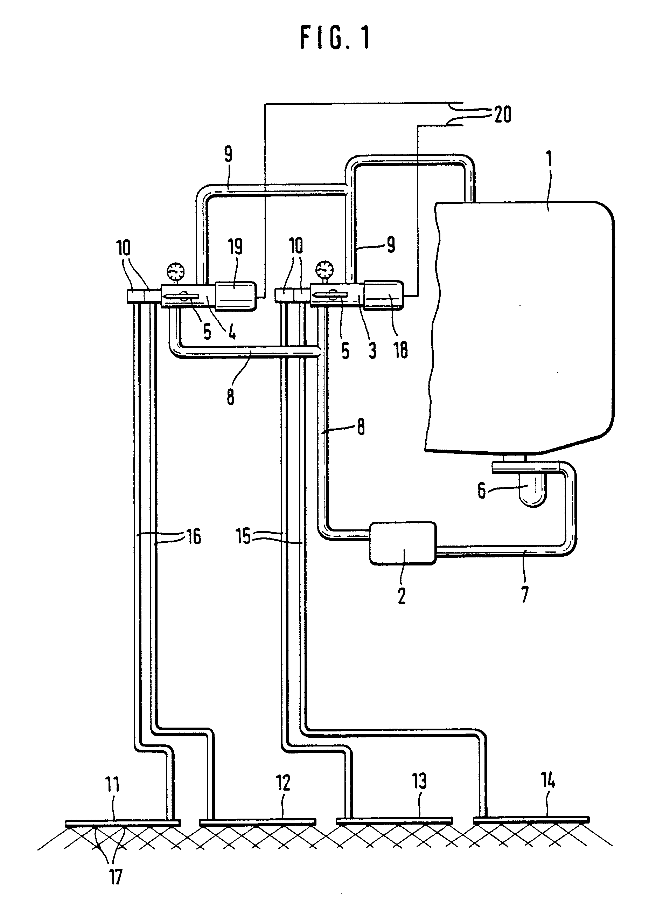

Die beiden Regelventile 3 und 4 können über die elektrischen Verstellmotore 18 und 19 jeweils unabhängig voneinander verstellt werden. Das in Fig. 1 schematisch dargestellte Spritzgestänge weist die vier Abschnitte 11, 12, 13 und 14 auf, wobei dem Regelventil 4 die Abschnitte 11 und 12 und dem Regelventil 3 die Abschnitte 13 und 14 zugeordnet sind. Über das Regelventil 3 kann die Spritzmenge, die die Düsen 17 in den Abschnitt 13 und 14 ausbringen, geregelt werden, während die Ausbringmenge, die die Spritzdüsen 17 der Abschnitte 11 und 12 ausbringen, über das Regelventil 4 geregelt werden kann. Somit ist es also möglich, daß die Ausbringmenge der Feldspritze während des Spritzvorganges abschnittsweise in den Abschnitten der Spritzbreite ausgehend von einem Grundausbringmengenwert unabhängig voneinander zu vergrößern bzw. zu verkleinern ist. So kann beispielsweise über das Regelventil 4 in den Abschnitten 11 und 12 eine größere Spritzmittelmenge eingestellt werden als in den Abschnitten 13 und 14 von dem Regelventil 3 bestimmt wird. Es ist jedoch auch möglich, daß die Regelventile 3 und 4 so eingestellt werden, daß in allen Abschnitten 11, 12, 13 und 14 jeweils die gleiche Spritzmittelmenge ausgebracht wird.

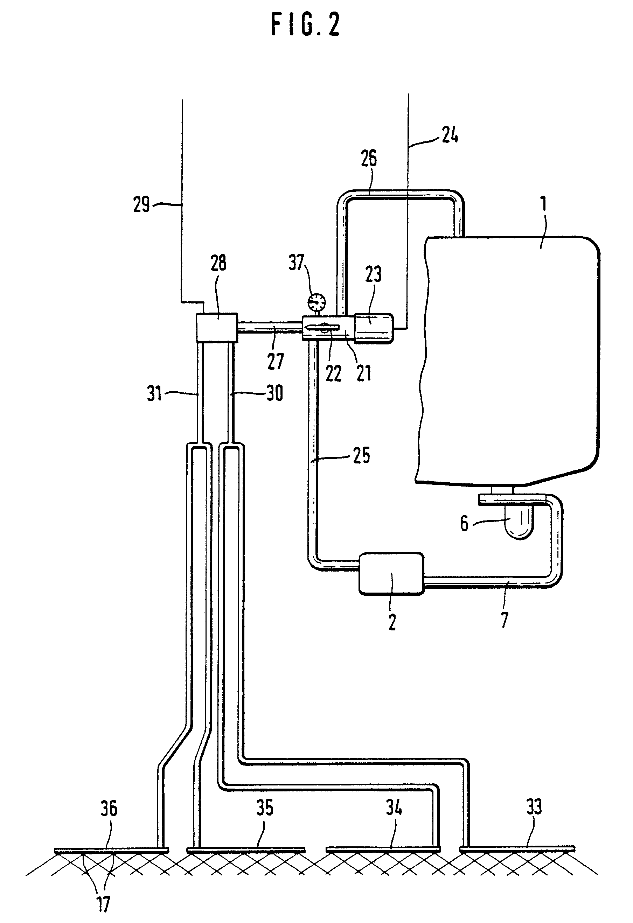

Die landwirtschaftliche Feldspritze gemäß Fig. 2 weist den Tank 1, eine Pumpe 2 und ein Druckregelventil 21 mit dem zentralen Absperrhahn 22 auf. An dem Druckregelventil 21 ist der elektrische Verstellmotor 23 angeordnet, über den das Druckregelventil 21 eingestellt bzw. verstellt werden kann. Der elektrische Verstellmotor 23 ist über das Kabel 24 mit einem in dem Schlepper, die die Feldspritze trägt, angeordneten Schaltkasten, verbunden. Somit kann also das Druckregelventil 21 vom Schleppersitz aus verstellt bzw. eingestellt werden. An dem Boden des Tankes 1 ist der Filter 6 angeordnet, an den die Zufuhrleitung 7 zu der Pumpe 2 angeschlossen ist. Die Pumpe 2 wird in bekannter Weise von der Zapfwelle eines Fahrzeuges angetrieben. Die Pumpe 2 saugt über die Zufuhrleitung 7 die Spritzmittelflüssigkeit aus dem Tank 1 an und drückt diese Flüssigkeit über die weitere Zufuhrleitung 25 zu dem Druckregelventil 21. Des weiteren ist an dem Druckregelventil 21 noch die Rückflußleitung 26, die an den Tank 1 angeschlosen ist, angeordnet.

An das Druckregelventil 21 schließt sich die zentrale Ausbringleitung 27 an. An diese zentrale Ausbringleitung 27 ist das einstellbare Stromteilerventil 28 angeordnet, welches über das Kabel 29 mit einem auf dem Schlepper, der die Feldspritze trägt, angeordneten Schaltkasten verbunden ist. Über diesen Schaltkasten läßt sich dann das Stromteilerventil 29 einstellen. Das Stromteilerventil 28 weist zwei Ausgangsleitungen auf, an denen die Ausbringleitung 30 und die Ausbringleitung 31 angeschlossen ist. Des weiteren weisen die beiden Ausbringleitungen 30 und 31 noch die Verzweigung 32 auf, so daß an jeder Ausbringleitung 30 bzw. 31 zwei Abschnitte des Spritzgestänges angeschlossen sind. An der Ausbringleitung 30 sind die Abschnitte 33 und 34 des Spritzbalkens bzw. der Spritzbreite angeordnet, während an der Ausbringleitung 31 die Abschnitte 35 und 36 der Spritzbreite bzw. des Spritzgestänges, an denen die Düsen 17 jeweils angeordnet sind, angeschlossen.

Entsprechend dem über das Druckregelventil 21 eingestellten Spritzdruck, der an dem Manometer 37 ablesbar ist, wird die gewünschte Flüssigkeitsmenge über das Stromteilerventil 28 den Ausbringleitungen 30 und 31 und somit den Düsen 17, die in den einzelnen Abschnitten 33, 34, 35 und 36 der Spritzbreite angeordnet sind, zugeführt.

Über das Stromteilerventil 28 kann die Ausbringmenge innerhalb der Spritzbreite der Feldspritze in Abschnitten unterschiedlich bzw. gleich eingestellt werden. Das Stromteilerventil 28 kann so eingestellt werden, daß den Ausbringleitungen 30 und 31 jeweils die gleiche Spritzmittelmenge zugeführt wird. Weiterhin ist es jedoch auch möglich, daß Stromteilerventil 28 so einzustellen, daß der Ausbringleitung 30 eine größere Spritzmittelmenge als der Ausbringleitung 31 oder umgekehrt zugeführt wird. Des weiteren ist es auch möglich, das Stromteilerventil 28 und gleichzeitig das Druckregelventil 21 über den Schaltkasten, der eine entsprechende Regelelektronik aufweist, die zusätzlich noch die Fahrgeschwindigkeit und die verschieden ab- oder zuschaltbaren Feilbreiten berücksichtigen kann, so zu verstellen, daß beispielsweise der Ausbringleitung 30 weiterhin die Grundausbringmenge zugeführt wird, während der Ausbringleitung 31 mehr oder weniger an Spritzmittelmenge zugeführt wird. Somit ist es also möglich, daß die Ausbringmenge vom Schleppersitz aus während des Spritzvorganges abschnittsweisen in Abschnitten der Spritzbreite zu vergrößern oder zu verkleinern ist.

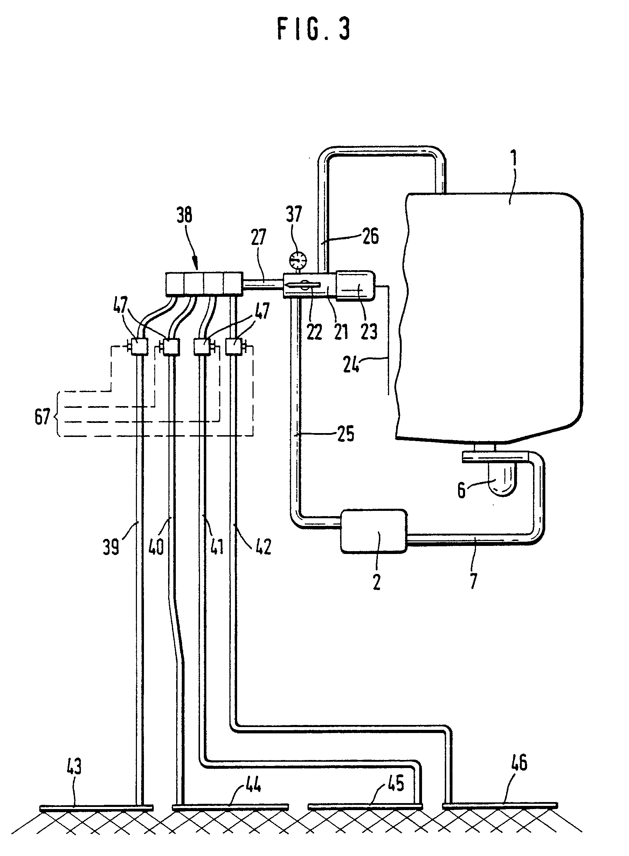

Die Feldspritze gemäß Fig. 3 weist einen Tank 1, eine Pumpe 2 und ein Druckregelventil 21 mit dem zentralen Absperrhahn 22 auf. Am Boden des Tankes 1 ist der Filter 6 angeordnet, an den die Zufuhrleitungen 7 zu der Pumpe 2 angeschlossen ist. Die Pumpe 2 wird in bekannter Weise von der Zapfwelle eines Fahrzeuges angetrieben. Die Pumpe 2 saugt über die Zufuhrleitungen 7 und den Filter 6 die Spritzmittelflüssigkeit aus dem Tank 1 an und drückt diese Flüssigkeit über die weiterführende Zufuhrleitung 25 zu dem Druckregelventil 21. Entsprechend dem von dem Druckregelventil 21 eingestellten Spritzdruck, der an dem Manometer 37 abzulesen ist, wird die gewünschte Flüssigkeitsmenge der zentralen Ausbringleitung 27 zugeführt. Das Druckregelventil 21 kann über den elektrischen Verstellmotor 23, der über das Kabel 24 mit einem nicht dargestellten Schaltkasten, der auf dem Schlepper, der die Feldspritze trägt, angeordnet ist, verbunden ist, so daß direkt vom Schleppersitz aus über diesen Schaltkasten und über den elektrischen Verstellmotor 23 das Druckregelventil eingestellt bzw. verstellt werden kann. An die zentrale Ausbringleitung 27 ist die Teilbreitenabschaltarmatur 38 angeordnet. An diese Teilbreitenabschaltarmatur sind die Ausbringleitungen 39, 40, 41 und 42 angeordnet, die jeweils einem Abschnitt 43, 44, 45 und 46 zugeordnet sind. In den Ausbringleitungen 39, 40, 41, 42 ist jeweils ein einstellbares Drosselventil angeordnet. Diese Drosselventile 47 sind über die Kabel 48, welche zu dem einen Steuer- und Regelelektroni aufweisenden Schaltkasten, der auf dem Schlepper angeordnet ist, führen, elektrisch ein- bzw. verstellbar, so daß die den einzelnen Abschnitten 43, 44, 45 und 46 über die Ausbringleitungen 39, 40, 41 und 42 zugeführte Ausbringmenge jeweils in der Spritzbreite unabhängig voneinander einstellbar ist. Hierbei ist dann die Regelung bzw. die Einstellung der Drosselventile 47 mit der Einstellung des Druckregelventiles 21 verknüpft, so daß die Ausbringmenge in den einzelnen Abschnitten der Spritzbreite insgesamt verändert bzw. teilweise verändert und teilweise beibehalten werden kann. Somit ist es also in einfacher Weise möglich, daß die Spritzmenge vom Schleppersitz aus während des Spritzvorganges abschnittsweise in Abschnitten der Spritzbreite unabhängig voneinander ausgehend von einem Grundausbringmengenwert zu vergrößern bzw. zu verkleinern ist.

Die landwirtschaftliche Feldspritze gemäß Fig. 1 weist einen Tank 1, eine Pumpe 2 und ein Druckregelventil 21 mit dem zentralen Absperrhahn 22 auf. Am Boden des Tankes 1 ist der Filter 6 angeordnet, an die die Zufuhrleitung 7 zu der Pumpe 2 angeschlossen ist. Die Pumpe 2 wird in bekannter Weist von der Zapfwelle eines Fahrzeuges angetrieben. Die Pumpe 2 saugt über die Zufuhrleitung 7 und den Filter 6 die Spritzmittelflüssigkeit aus dem Tank 1 an und drückt diese Flüssigkeit über die weiterführende Zufuhrleitung 25 zu dem Druckregelventil 21. Entsprechend dem über das Druckregelvenil 21 eingestellten Spritzdruck, der an dem Manometer 37 abzulesen ist, wird die gewünschte Flüssigkeitsmenge in bekannter Weise der zentralen Ausbringleitung 48 zugeführt. An die zentrale Ausbringleitung 48 ist die Verteilerarmatur 49 angeschlossen, an welche die einzelnen Ausbringleitungen 50 angeschlossen sind. Hierbei sind in jedem Abschnitt 51, 52, 53, 54 der Spritzbreite jeweils die drei Ausbringleitungen 55, 56 und 57 angeordnet, wobei jede Ausbringleitung 55, 56, 57, die jeweils wieder im einzelnen in die Abschnitte 51, 52, 53 und 54 unterteilt sind, unabhängig voneinander in den einzelnen Abschnitten der Spritzbreite zu- bzw. abschaltbar sind. Dieses geschieht über die Verteilerarmatur 49, die für jede der Ausbringleitungen 50 eine Abschaltmöglichkeit vorsieht. Hierbei weist die Verteilerarmatur 49 eine nicht dargestellte Fernbedienungsvorrichtung auf, so daß die Verteilerarmatur vom Schleppersitz aus zu bedienen ist.

Über das Druckregelventil 21 wird eine bestimmte Spritzmittelmenge in die zentrale Ausbringleitung 48 eingespeist, über welche die auszubringende Spritzmittelmenge über die Verteilerarmatur 49 den Spritzdüsen 17 zugeführt wird. Hierbei ist es vor gesehen, daß im normalen Ausbringfall über die Verteilerarmatur 49 lediglich den Düsen 17 in den Ausbringleitungen 55 und 56 Spritzmittel zugeführt wird. Falls mehr Spritzmittel ausgebracht werden soll, werden über die Verteilerarmatur 49 die einzelnen Abschnitte in den Ausbringleitungen 57 zugeschaltet, so daß zusätzlich über die Ausbringleitungen 57 Spritzmittel ausgebracht wird. Hierdurch ist es in einfacher Weise möglich, sehr große zusätzliche Ausbringmengen mehr auszubringen. Soll weniger Spritzmittel ausgebracht werden, so wird die Ausbringleitung 56 über die Verteilerarmatur 49 abgeschaltet, so daß dann nur noch über die Ausbringleitungen 55 Spritzmittel ausgebracht wird. Hierbei ist es durchaus denkbar, daß nicht gleichzeitig alle Abschnitte der Ausbringleitungen 55, 56 bzw. 57 gemeinsam, sondern den Spritz- bzw. Ausbringverhältnissen entsprechend nur einzelne Abschnitte zu- bzw. abgeschaltet werden, was über die Verteilerarmatur 49 geschieht. Darüber hinaus kann zusätzlich die der zentralen Ausbringleitung 48 zugeführte Ausbringmenge durch Verstellen des Regelventiles 21 über den elektrischen Verstellmotor 23, der über das Kabel 24 mit einem auf dem Schlepper angeordneten Schaltkasten verbunden ist, verstellt werden. Dieser Schaltkasten kann eine Regel aufweisen, die sämtliche Parameter und Einstelldaten des Regelventils und der Verteilarmatur 49 berücksichtigt.

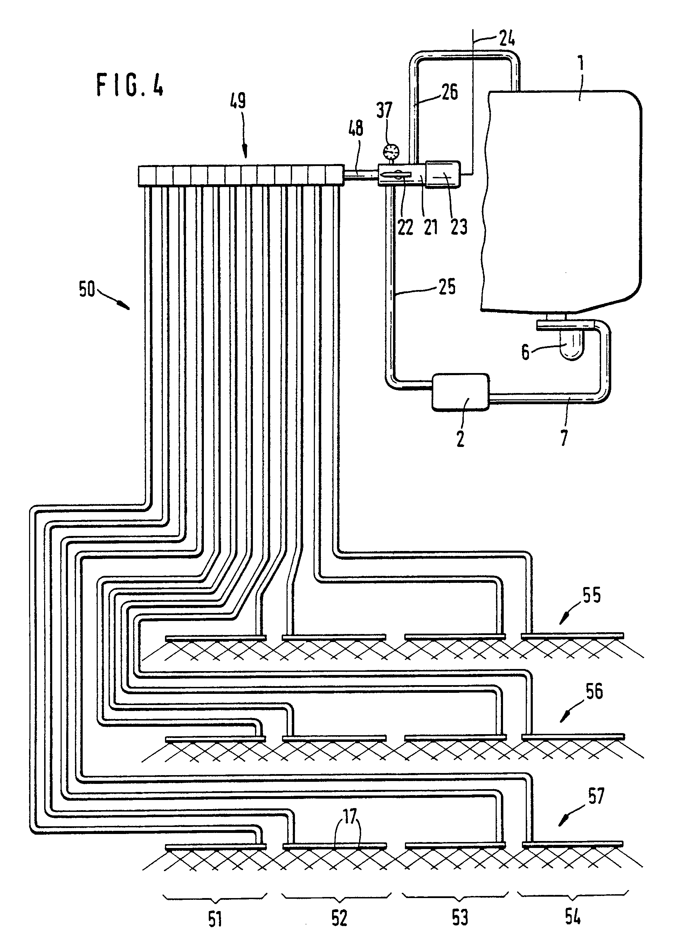

Somit ist es also bei der Feldspritze gemäß der Fig. 4 möglich, daß die Ausbringmenge vom Schleppersitz aus während des Spritzvorganges zu vergrößern bzw. zu verkleinern ist, und zwar insgesamt über die gesamte Ausbringmenge, als auch abschnittsweise in Abschnitten der Spritzbreite der Feldspritze und zwar auch jeweils abschnittsweise in Abschnitten unabhängig voneinander.

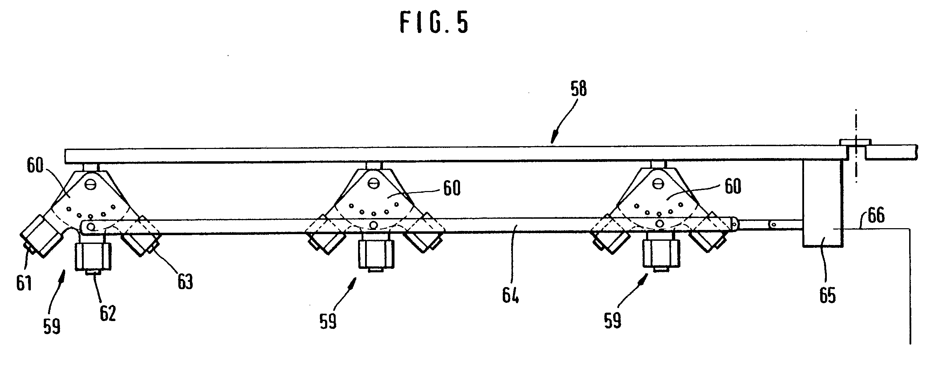

Bei der Feldspritze gemäß Fig. 5, ist nur ein Teil des Verteilergestänges 58 dieser Feldspritze dargestellt. An diesem Verteilergestänge sind die Ausbringdüsen 59 als Mehrfachdüsenhalter 60 mit den verschiedenen Düsen 61, 62,63 angeordnet. Die Mehrfachdüsenhalter 60 sind über die Stange 64 miteinander verbunden. An diese Stangen 64 greift das Verstellelement 65 an, welches als elektrischer Verstellmotor ausgebildet ist, der über das Kabel 66 mit einem auf dem Schlepper, der die Feldspritze trägt, angeordneten Schaltkasten verbunden ist, so daß vom Schleppersitz aus über den elektrischen Verstellmotor 65 die Stange 64 hin- und hergeschoben werden kann, so daß die Mehrfachdüsenhalter 60 verschwenkt werden können. Somit können durch das Verschwenken der Mehrfachdüsenhalter 60 entweder die Düsen 61 oder die Düsen 62 bzw. die Düsen 63 in die nach unten ragenden Stellung, wie es in Fig. 5 bei der Düse 62 dargestellt ist, eingestellt werden. Somit kann als je nach den vorliegenden Einsatzbedingungen die entsprechende Düse 61, 62 oder 63 zum Einsatz gebracht werden. Diesen Mehrfachdüsenhaltern 60 bzw. den jeweils im Einsatz befindlichen Düsen wird über Ausbringleitungen die Spritzmittelmenge, die über ein Regelventil dosiert wird, zugeführt. An dem Verteilergestänge 58 der Feldspritze sind mehrere Abschnitte unabhängig voneinander verstellbarer Mehrfachdüsenhalter 60 vorgesehen. Somit ist es also durch Verstellen der Mehrfachdüsenhalter 60 möglich, daß die Ausbringmenge vom Schleppersitz aus während des Ausbringvorganges abschnittsweise in Abschnitten der Spritzbreite ausgehend von einem Grundausbringmengenwert, der hier beispielsweise durch die Düse 62 bei einer entsprechenden Stellung des Regelventiles bestimmt wird, vergrößert oder verkleinert wird, indem entweder die Düse 61 bzw. die Düse 63 zum Einsatz gebracht wird. Des weiteren ist es jedoch auch möglich, daß durch gleichzeitiges Verschwenken sämtlicher Mehrfachdüsenhalter in allen Abschnitten der Spritzbreite der Feldspritze die Ausbringmenge über die gesamte Spritzbreite der Feldspritze vergrößert bzw. verkleinert wird. Zusätzlich kann es erforderlich sein, daß gleichzeitig mit dem Verschwenken der Mehrfachdüsenhalter 60 das Regelventil ebenfalls verstellt werden muß. Dieses kann beispielsweise automatisch über eine entsprechende Regelelektronik geschehen.

## Ansprüche

1. Landwirtschaftliche Feldspritze zum dosierten Ausbringen von Flüssigkeiten, insbesondere flüssigen Düngemitteln und Pflanzenbehandlungsmitteln, bestehend aus einer mit einer von der Zapfwelle eines Zugfahrzeuges angetriebenen Pumpe verbundenen Zufuhrleitung und zumindest einer sich an die Zufuhrleitung anschließenden und zu den in einem Verteilergestänge angeordneten Ausbringdüsen führenden Ausbringleitung, wobei zwischen der Zufuhrleitung und den Ausbringleitungen bzw. den Ausbringdüsen zumindest ein Dosierventil zur Regelung und Einstellung der Ausbringmenge angeordnet ist, wobei die Ausbringmenge vom Schleppersitz aus während des Spritzvorganges zu vergrößern bzw. zu verkleinern ist, wobei zumindest zwei Ausbringleitungen vorgesehen sind, die jeweils einem Abschnitt der Spritzbreite zugeordnet sind, dadurch gekennzeichnet, daß jeder Ausbringleitung (15,16,30,31,39,40,41,42,50) ein Dosierventil (3,4,18,19,28,47,49) mit einer Einstellvorrichtung (20,24,29) zugeordnet ist, wobei die Einstellvorrichtungen derart ausgebildet sind, daß die Dosierventile (18,19,28,47,49) unabhängig voneinander ein- und verstellbar sind und daß die Dosierventile in gleichen Stellungen oder in verschiedenen Stellungen unabhängig voneinander einzustellen oder zuverstellen sind.

2. Feldspritze nach Anspruch 1, dadurch gekennzeichnet, daß die Dosierventile als Regelventile ausgebildet sind, daß zumindest zwei Regelventile (3,4) vorgesehen sind, die unabhängig vom Schleppersitz aus regelbar sind.

3. Feldspritze nach Anspruch 2, dadurch gekennzeichnet, daß jedem Abschnitt (11,12,13,14) der Spritzbreite ein Regelventil (3,4) zugeordnet ist.

4. Feldspritze nach Anspruch 1, dadurch gekennzeichnet, daß hinter dem Regelventil (21) zumindest ein Stromteilerventil (28) angeordnet ist.

5. Feldspritze nach Anspruch 4, dadurch gekennzeichnet, daß an die Ausgangsleitungen des bzw. der Stromteilerventile (28) jeweils die Ausbringleitungen (30,31) des jeweiligen Abschnittes (33,34,35,36) der Spritzbreite angeschlossen sind, und daß das Stromteilerventil (28) vom Schleppersitz aus über ein Fernbedienungsvorrichtung (29) einstellbar ist.

6. Feldspritze nach Anspruch 1, dadurch gekennzeichnet, daß jeweils in jeder der Ausbringleitungen, die jeweils einem Abschnitt (43,44,45,46) der Spritzbreite zugeordnet sind, ein als einstellbares Drosselventil (47) ausgebildetes Dosierventil angeordnet ist.

7. Feldspritze nach Anspruch 6, dadurch gekennzeichnet, daß die Drosselventile (47) vom Schleppersitz aus einstellbar sind.

8. Feldspritze nach Anspruch 1, dadurch gekennzeichnet, daß in jedem Abschnitt der Spritzbreite zumindest zwei, vorzugsweise drei Ausbringleitungen mit Ausbringdüsen angeordnet sind, wobei jede Ausbringleitung (55,56,57) unabhängig von der anderen Ausbringleitung (55,56,57) in einem Abschnitt der Spritzbreite zu- bzw. abschaltbar ist.

9. Feldspritze nach Anspruch 1, dadurch gekennzeichnet, daß als Ausbringdüsen Mehrfachdüsenhalter (60) mit verschiedenartigen Düsen (61,62,63) vorgesehen sind, und daß über eine Fernbedienungsvorrichtung (65) die Mehrfachdüsenhalter (60) verstellbar sind, so daß vom Schleppersitz auf jeweils die Düsen (61,62,63) durch Verstellen der Mehrfachdüsenhalter (60) wechselbar sind.

## Claims

1. An agricultural field spray for metered distribution of liquids, particularly liquid fertilisers and plant treatment agents, consisting of a feedpipe connected to a pump driven by the power take-off shaft of a towing vehicle, and at least one distributor pipe connecting with the feedpipe and leading to the distributor nozzles disposed on a distributor bar, at least one metering valve for regulating and setting the distribution rate being disposed between the feedpipe and the distributor pipes or the distributor nozzles, the distribution rate being capable of increase or reduction from the tractor driver's seat during actual spraying, at least two distributor pipes being provided each of which is associated with a portion of the spray width, characterised in that there is associated with each distributor pipe (15, 16, 30, 31 , 39, 40, 41, 42, 50) a metering valve (3, 4, 18, 19, 28, 47, 49) with a setting device (20, 24, 29), the setting devices being so designed that the metering valves (18, 19, 28, 47, 49) can be shifted and set independently of one another, and that the metering valves can be set or shifted independently of one another in identical positions or in different positions.

2. A field spray according to Claim 1, characterised in that the metering valves are designed as regulating valves, and that at least two regulating valves (3, 4) are provided, which may be controlled independently from the tractor driver's seat.

3. A field spray according to Claim 2, characterised in that a regulating valve (3, 4) is associated with each portion (11, 12, 13, 14) of the spray width.

4. A field spray according to Claim 1, characterised in that at least one flow-divider valve (28) is disposed behind the regulating valve (21).

5. A field spray according to Claim 4, characterised in that there are connected to the outlet pipes of the flow-divider valve or valves (28) in each case the distributor pipes (30,31) of the respective portion (33, 34, 35, 36) of the spray width, and that the flow-divider valve (28) is settable from the tractor driver's seat via a remote-control device (29).

6. A field spray according to Claim 1, characterised in that there is disposed in each of the distributor pipes, each of which is associated with a portion (43, 44, 45, 46) of the spray width, a metering valve designed as a settable throttle valve (47).

7. A field spray according to Claim 6, characterised in that the throttle valves (47) are settable from the tractor driver's seat.

8. A field spray according to Claim 1. characterised in that there are disposed in each portion of the spray width at least two, preferably three distributor pipes with distributor nozzles, each distributor pipe (55, 56, 57) being connectable to and disconnectable in a portion of the spray width, independently of the other distributor pipe (55, 56, 57).

9. A field spray according to Claim 1, characterised in that there are provided as distributor nozzles multiple nozzle holders (60) with various nozzles (61, 62, 63), and that the multiple nozzle holders (60) are shiftable by means of a remote control device (65), so that the nozzles (61, 62, 63) are interchangeable from the tractor driver's seat by shifting the multiple nozzle holders (60).


**Revendications**

1. Pulvérisateur agricole pour cultures de plein champ, pour le débit dosé de liquides, notamment d'engrais liquides et de produits de traitement des plantes, pulvérisateur comportant une canalisation d'alimentation reliée à une pompe entraînée par la prise de force d'un tracteur, et comportant au moins une canalisation de débit se raccordant à la canalisation d'alimentation et aboutissant aux buses de débit disposées sur une tringlerie de répartition, tandis qu'entre la canalisation d'alimentation et les canalisations de débit, ou les buses de débit, est disposée au moins une vanne de dosage pour la régulation et l'ajustement de la quantité débitée, cette quantité débitée pouvant être augmentée ou bien diminuée à partir du siège du tracteur pendant le processus de pulvérisation, et au moins deux canalisations de débit étant prévues qui sont respectivement associées à un tronçon de la largeur de pulvérisation, pulvérisateur caractérisé en ce qu'à chaque canalisation de débit (15, 16, 30, 31, 39, 40, 41, 42, 50) est associée une vanne de dosage (3, 4, 18, 19, 28, 47, 49) avec un dispositif de réglage (20, 24, 29), ces dispositifs de réglage étant réalisés de façon que les vannes de dosage (18, 19, 28, 47, 49) peuvent être réglées indépendamment l'une de l'autre, et que ces vannes de dosage peuvent être réglées dans les mêmes positions ou dans des positions différentes indépendamment les unes des autres.

2. Pulvérisateur selon la revendication 1, caractérisé en ce que les vannes de dosage sont réalisées sous la forme de vannes de réglage, en ce qu'il est prévu au moins deux vannes de réglage (3, 4) qui peuvent être réglées indépendamment à partir du siège du tracteur.

3. Pulvérisateur selon la revendication 2, caractérisé en ce qu'à chaque tronçon (11, 12, 13, 14) de la largeur de pulvérisation, est associée une vanne de réglage (3, 4).

4. Pulvérisateur selon la revendication 1, caractérisé en ce qu'au moins un diviseur de débit (28) est disposé derrière la vanne de réglage (21).

5. Pulvérisateur selon la revendication 4, caractérisé en ce qu'aux canalisations de sortie du diviseur ou bien des diviseurs de débit (28) sont respectivement raccordées les canalisations de débit (30, 31) du tronçon considéré (33, 34, 35, 36) de la largeur de pulvérisation, et en ce que le diviseur de débit (28) est susceptible d'être réglé à partir du siège du tracteur par l'intermédiaire d'un dispositif de commande à distance.

6. Pulvérisateur selon la revendication 1, caractérisé en ce que, sur chacune des canalisations de débit qui sont respectivement associées à un tronçon (43, 44, 45, 46) de la largeur de pulvérisation, est disposée une vanne de dosage réalisée sous la forme d'une vanne d'étranglement réglable (47).

7. Pulvérisateur selon la revendication 6, caractérisé en ce que les vannes d'étranglement (47) sont susceptibles d'être réglées à partir du siège du tracteur.

8. Pulvérisateur selon la revendication 1, caractérisé en ce que dans chaque tronçon de la largeur de pulvérisation, sont disposées au moins deux, et de préférence trois, canalisations de débit avec des buses de débit, chaque canalisation de débit (55, 56, 57) étant susceptible d'être branchée ou débranchée dans un tronçon de la largeur de pulvérisation, indépendamment des autres canalisations de débit (55, 56, 57).

9. Pulvérisateur selon la revendication 1, caractérisé en ce qu'il est prévu comme buses de débit, des supports de multiples buses (60) avec des buses de différents types (61, 62, 63), et en ce que, par l'intermédiaire d'un dispositif de commande à distance (65) les supports de multiples buses (60) sont susceptibles d'être déplacés, de sorte qu'à partir du siège du tracteur les buses (61, 62, 63) peuvent être substituées l'une à l'autre par déplacement des supports de multiples buses (60).

# FIG. 1

# FIG.2

# FIG. 3

FIG.4

FIG.5